Europäisches Patentamt

European Patent Office

Office européen des brevets

(11) Veröffentlichungsnummer: **0 323 565**
**A1**

(12) **EUROPÄISCHE PATENTANMELDUNG**

(21) Anmeldenummer: 88119527.5

(22) Anmeldetag: 24.11.88

(51) Int. Cl.⁴: **B30B 15/02 , F16J 15/46**

(30) Priorität: 06.01.88 CH 29/88

(43) Veröffentlichungstag der Anmeldung:
**12.07.89 Patentblatt 89/28**

(84) Benannte Vertragsstaaten:
**AT BE CH DE ES FR GB IT LI NL SE**

(71) Anmelder: **PAVATEX AG**
**Rigistrasse 8**
**CH-6330 Cham(CH)**

(72) Erfinder: **Gugolz, Hansjörg**
**Kirchgasse**
**Ch-8872 Weesen(CH)**

(74) Vertreter: **EGLI-EUROPEAN PATENT**
**ATTORNEYS**
**Horneggstrasse 4 Postfach 473**
**CH-8034 Zürich(CH)**

(54) **Pressvorrichtung für flächige Produkte.**

㉗ Die Erfindung bezieht sich auf eine im wesentlichen aus einer Anzahl Pressplatten gebildeten Pressvorrichtung (100) zum Pressen grossflächiger, zwischen den Pressplatten angeordneter Plattenrohlinge (40) aus Holzwerkstoffen bei etwa 200° C zu Hartfaserplatten oder dergleichen, wobei zur Erreichung einer gewünschten, einwandfreien Oberflächenstruktur sowie zur Vermeidung vorzeitigen Verschleisses der einzelnen Pressplatten (10) je ein damit wirkverbundenes, plattenartig ausgebildetes Zwischenstück (30) zugeordnet und lösbar befestigt ist.

Auf der dem Zwischenstück (30) zugewandten Seite ist die Pressplatte (10) mit einer umlaufenden Nut (15) zur Aufnahme eines Dichtelements (20,21,23,25) versehen, welches zwischen den beiden Platten (10,30) einen relativ engen, spaltartigen und gegen die Atmosphäre begrenzten Raum (S) bildet. Der Raum (S) steht über mindestens einen Kanal (11) mit einem Vakuum-Erzeuger (70) und das Dichtelement im wesentlichen mit einem Druck-Erzeuger (80) in Wirkverbindung, wobei das Vakuum/Druckverhältnis so gewählt ist, dass das Zwischenstück (30) abgedichtet und vakuumvorgespannt an der Pressplatte (10) gehalten ist.

FIG. 2

## Pressvorrichtung für flächige Produkte

Die Erfindung bezieht sich auf eine Pressvorrichtung für flächige Produkte, insbesondere zum Pressen grossflächiger Plattenrohlinge aus Holzwerkstoffen oder dergleichen, bestehend aus mindestens einer ersten Pressplatte, einem damit wirkverbundenen, plattenartigen Zwischenstück sowie mindestens einer zur Auflage des Plattenrohlings vorgesehenen zweiten Pressplatte.

Pressvorrichtungen mit einer Anzahl in horizontaler Ebene und im wesentlichen in parallelem Abstand übereinanderliegenden Pressplatten zum verdichtenden Zusammenpressen -vorzugsweise bei gleichzeitiger Anwendung von Druck und Wärme- von grossflächigen Plattenrohlingen zu widerstandsfähigen Platten aus Holzwerkstoffen sind an sich bekannt. Zum Trennen des gepressten Holzwerkstoff-Produktes nach dem Pressvorgang von der jeweiligen Pressplatte sowie zur Erreichung einer bestimmten Oberflächenstruktur ist an den Pressplatten jeweils ein plattenartiges Zwischenstück angeordnet. Das einzelne, beispielsweise lösbar an der zugeordneten Pressplatte befestigte und von Zeit zu Zeit auszuwechselnde Zwischenstück bewirkt eine einwandfreie Oberflächenstruktur des Produkts und verhindert einen vorzeitigen Verschleiss der Pressplatte.

Das Problem der bekannten Pressvorrichtungen besteht im wesentlichen in der Befestigungsart des Zwischenstücks an der Pressplatte mittels im äusseren Bereich am Umfang angeordneter Schraubverbindungen oder dergleichen, welche Befestigungsart hinsichtlich der Montage und Demontage relativ arbeitsaufwendig ist. Ein weiterer Nachteil besteht zudem darin, dass das einzelne Zwischenstück flächenmässig nicht eng genug an der Pressplatte anliegt, so dass in unbetätigtem Zustand der Pressvorrichtung, bei welchem die Pressplatten mit den jeweils daran angeordneten Zwischenstücken im Abstand zueinander angeordnet sind, die einzelnen Zwischenstücke aufgrund des Eigengewichts in bezug zu den Pressplatten durchhängen und somit beim Öffnen der Pressvorrichtung eine Saugwirkung entsteht, bei welcher aggressive Medien und Gase sowie Fremdpartikel zwischen die einzelnen Platten gelangen können. Die dadurch beim Schliessen der Pressvorrichtung entstehenden Unebenheiten beeinträchtigen die Oberflächenqualität der Produkte.

Das bei den bekannten Pressvorrichtungen vorliegende Problem, nämlich die zeitaufwendige Montage sowie das Durchhängen des an der jeweiligen Pressplatte angeordneten, plattenartigen Zwischenstücks zu verhindern wird gemäss der Erfindung dadurch gelöst, dass die Pressplatte auf der dem Zwischenstück zugewandten Seite mit einer umlaufenden Nut zur Aufnahme eines an dem Zwischenstück abdichtend anliegenden Dichtelements versehen ist, und dass ein dabei zwischen der Pressplatte sowie dem Zwischenstück gebildeter, spaltartiger Raum über mindestens einen Kanal mit einem Vakuum-Erzeuger in Wirkverbindung steht, mittels welchem ein das Zwischenstück an der Pressplatte festhaltender Unterdruck erzeugbar ist.

Die erfindungsgemässe, lösbare Befestigung des Zwischenstücks an der Pressplatte gewährleistet ein relativ einfaches und rasches Montieren und Ausrichten sowie eine stabile Lage des Zwischenstücks relativ zur Pressplatte.

Weitere Merkmale der Erfindung ergeben sich aus der folgenden Beschreibung in Verbindung mit der Zeichnung und den einzelnen Patentansprüchen.

Ausführungsbeispiele des Erfindungsgegenstandes werden nachstehend anhand der Zeichnung beschrieben.
Es zeigt:

Fig. 1 eine schematisch dargestellte Pressvorrichtung zum Pressen grossflächiger Plattenrohlinge,

Fig. 2 ein perspektivisch und in grösserem Massstab dargestelltes Teilstück der Pressvorrichtung gemäss Fig.1,

Fig. 3 ein erstes, in Schnittansicht dargestelltes Ausführungsbeispiel der Pressvorrichtung in einer Vorbereitungsphase,

Fig. 4 das Ausführungsbeispiel gemäss Fig.3 in einer Arbeitsphase,

Fig. 5 ein zweites, in Schnittansicht dargestelltes Ausführungsbeispiel der Pressvorrichtung in der Arbeitsphase,

Fig. 6 ein drittes, in Schnittansicht dargestelltes Ausführungsbeispiel der Pressvorrichtung in der Arbeitsphase,

Fig. 7 ein viertes, in Schnittansicht dargestelltes Ausführungsbeispiel der Pressvorrichtung in der Arbeitsphase, und

Fig. 8 einen in Draufsicht dargestellten Ausschnitt einer Pressplatte.

Bei einer nicht dargestellten Produktionsanlage zur Herstellung plattenartiger Produkte, beispielsweise zur Herstellung von Hartfaserplatten im sogenannten Nassverfahren, werden im wesentlichen in einer ersten Phase beispielsweise Sägereiresthölzer oder dergleichen, in einer Hackvorrichtung zerkleinert und anschliessend in einer entsprechend zugeordneten Mahlvorrichtung mit etwa 150°C heissem Wasserdampf aufgeweicht und anschliessend zu feinem Holzfaserbrei zermahlen.

In einem nächsten Verfahrensschritt wird der bereits zu einem Plattenrohling geformten Fasermasse in einer Entwässerungsvorrichtung mit geeigneten Mitteln ein erster, wesentlicher Wasseranteil entzogen.

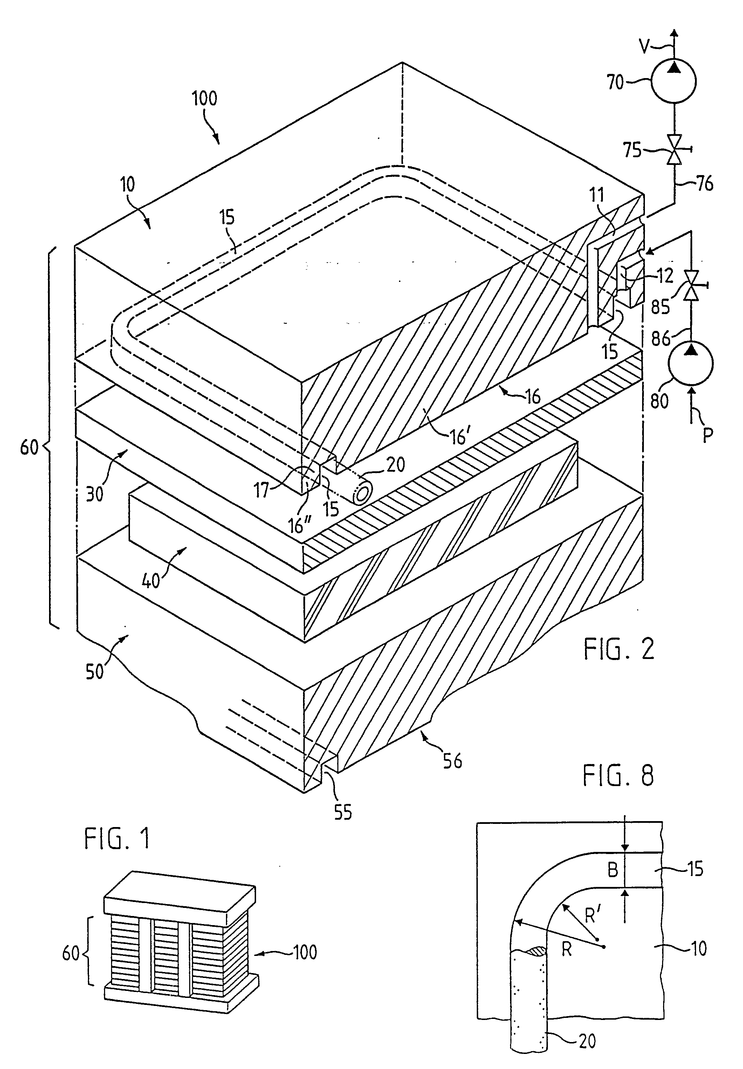

Anschliessend werden die Plattenrohlinge einer entsprechend ausgebildeten und in Fig.1 schematisch dargestellten Pressvorrichtung 100 zugeführt, in welcher jeweils der einzelne Plattenrohling auf entsprechend im Abstand zueinander, übereinanderliegend angeordneten Pressplatten gelagert wird. Mittels nicht näher dargestellter Hydraulikpressen werden anschliessend die einzelnen Pressplatten mit den dazwischen liegenden Plattenrohlingen bei Temperaturen in der Grössenordnung von 200°C und einem bestimmten Pressdruck zu Platten, beispielsweise zu widerstandsfähigen Hartfaserplatten zusammengepresst.

In einer nicht dargestellten Härte- und Klimakammer werden die genannten Platten entsprechend nachbehandelt und anschliessend in einer Zuschnittvorrichtung auf die gewünschten Formate zugeschnitten und danach einer Lagervorrichtung zugeführt.

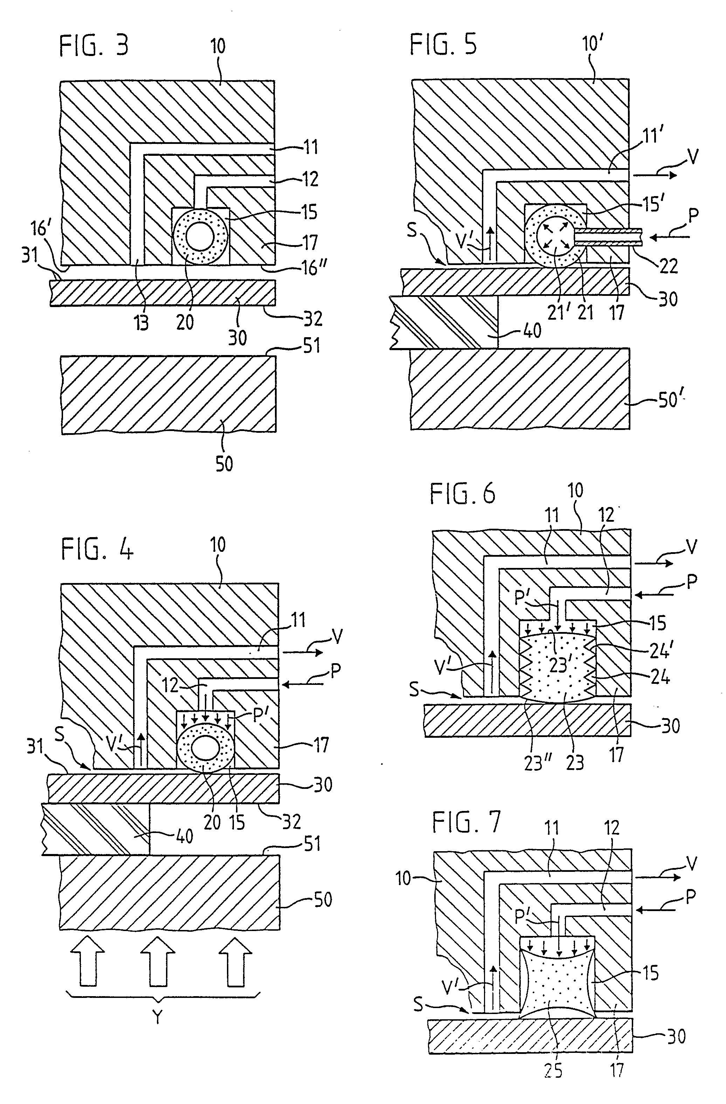

Fig.2 zeigt als allgemeine Übersicht ein in grösserem Massstab und perspektivisch dargestelltes Teilstück 60 der Pressvorrichtung 100 gemäss Fig.1 und man erkennt eine erste Pressplatte 10, ein der ersten Pressplatte 10 entsprechend zugeordnetes, plattenartiges Zwischenstück 30 sowie ein zwischen dem Zwischenstück 30 und einer nächsten, zweiten Pressplatte 50 angeordnetes Pressgut 40 (Plattenrohling). An einer dem Zwischenstück 30 zugewandten Seite 16 ist die Pressplatte 10 mit einer Nut 15 versehen, welche zur Aufnahme eines entsprechenden Dichtelements 20 ausgebildet ist. Die Nut 15 ist entsprechend der äusseren Formgebung der Pressplatte 10 vollumfänglich an der unteren Seite 16 vorgesehen, wobei die von der Nut 15 eingeschlossene Fläche mit 16' und die ausserhalb der Nut 15 von dem verbleibenden Steg 17 gebildete Fläche mit 16" bezeichnet ist. Die Pressplatte 10 hat mindestens einen mit der Nut 15 in Verbindung stehenden Kanal 12 sowie mindestens einen im wesentlichen mit der Fläche 16' in Verbindung stehenden Kanal 11, wobei an dem Kanal 11 über eine Leitung 76 und Ventil 75 ein schematisch dargestellter Vakuum-Erzeuger 70 und an dem Kanal 12 über eine Leitung 86 und Ventil 85 ein schematisch dargestellter Druck-Erzeuger 80 angeschlossen ist. Die hier mit 50 bezeichnete und an der mit 56 bezeichneten unteren Seite mit einer Nut 55 versehene Pressplatte sowie weitere, in Fig.2 nicht näher dargestellte Pressplatten sind analog der Pressplatte 10 ausgebildet.

Das in Fig.2 dargestellte Teilstück der Pressvorrichtung 100 zeigt die einzelnen Teile 10,30,40 und 50 als perspektivische Sprengzeichnung, wobei eine Vielzahl der genannten Teile zu einer mit 60 bezeichneten Einheit zusammengepresst werden. Beim Pressvorgang bildet die Pressplatte 10 mit dem Zwischenstück 30 beziehungsweise die Pressplatte 50 mit einem weiteren entsprechend zugeordneten, in Fig.2 nicht dargestellten Zwischenstück eine mit geeigneten Mitteln die Teile 10 und 30 usw. lösbar miteinander verbindende Baueinheit. Das plattenartige Zwischenstück 30 oder Zwischenblech entspricht in seinen äusseren Abmessungen im wesentlichen den äusseren Abmessungen der zugeordneten Pressplatte 10.

In Fig.3 ist in Schnittansicht als erstes Ausführungsbeispiel eine Befestigungsphase des Zwischenstücks 30 an der Pressplatte 10 dargestellt und man erkennt die im Abstand dazu angeordnete und mit einer Auflagefläche 51 versehene Pressplatte 50 sowie die hier noch im Abstand zum Zwischenstück 30 angeordnete Pressplatte 10. Die Pressplatte 10 ist, wie bereits vorstehend anhand von Fig.2 erwähnt, mit mindestens einem ersten Kanal 11 und mit mindestens einem zweiten Kanal 12 versehen, wobei der Kanal 12 hier in die umlaufende Nut 15 mündet und der Kanal 11 seitlich neben der Nut 15 in eine an der Fläche 16' der unteren Seite 16 vorgesehene Öffnung 13 mündet. Das in der umlaufenden Nut 15 angeordnete Dichtelement 20 ist bei diesem Ausführungsbeispiel als Hohlkörper, beispielsweise im Profilquerschnitt als kreisringförmiger Hohlkörper ausgebildet, wobei Dichtelemente mit anderen körperlichen Ausgestaltungen ebenfalls eingebaut werden können.

Fig.4 zeigt das erste Ausführungsbeispiel gemäss Fig.3 in der Arbeitsphase, in welcher das Zwischenstück 30 im wesentlichen vakuumvorgespannt an der Pressplatte 10 angeordnet und gehalten ist. Das Dichtelement 20 wird hierbei mittels dem Druck-Erzeuger 80 (Fig.2) über den Kanal 12 mit einem Druck P beaufschlagt, so dass der in der umlaufenden Nut 15 vorliegende Druck P mit Pfeilrichtung P' auf das Dichtelement 20 wirkt und dieses entsprechend verformt und abdichtend gegen die nicht näher bezeichneten Seitenwände der Nut 15 sowie gegen die der Pressplatte 10 zugewandte Seite 31 des Zwischenstücks 30 presst. Gleichzeitig wird mittels dem Vakuum-Erzeuger 70 (Fig.2) über dem ersten Kanal 11 in dem durch das umlaufende Dichtelement 20 zwischen der Pressplatte 10 und dem Zwischenstück 30 gebildeten, spaltartigen Raum S ein Vakuum erzeugt. Die relativ grosse, von dem an der Unterseite angeordneten Dichtelement 20 eingeschlossene Fläche des spaltartig ausgebildeten Raums S gewährleistet einen ausreichenden Unterdruck für eine lösbare Befestigung des Zwischenstücks 30 an der Pressplatte 10. Das in Fig.3 und Fig.4 im Profilquerschnitt als kreisringförmiger Hohlköper ausgebildete Dichtelemente 20 kann auch im Profilquerschnitt als Vollprofil mit für das Abdichten erforderlicher Elastizität ausgebildet sein.

In der in Fig.4 als Einzelheit der Pressvorrichtung 100 dargestellten Arbeitsphase werden die wesentlichen Einzelteile 10,30,40 und 50 wie bereits erwähnt, mittels der entsprechend dimensionierten, nicht dargestellten Hydraulikpressen bei etwa 200°C mit entsprechendem Druck in Pfeilrichtung Y zusammengepresst.

In Fig.5 ist ein zweites Ausführungsbeispiel in der Arbeitsphase dargestellt und man erkennt eine Pressplatte 10′ mit einem Kanal 11′, ein in einer Nut 15′ angeordnetes Dichtele ment 21, das Zwischenstück 30 und das Pressgut 40 gemäss dem ersten Ausführungsbeispiel (Fig.4) sowie eine entsprechend zugeordnete Pressplatte 50′. Abweichend von dem ersten Ausführungsbeispiel gemäss Figur 3 und 4, wird bei dieser Variante dem Innenraum 21′ des Dichtelements 21 über eine entsprechend zugeordnete Leitung 22 der das Dichtelement 21 gegen die nicht bezeichneten Innenwände der umlaufenden Nut 15′ sowie gegen das Zwischenstück 30 pressende Druck P zugeführt. Das Vakuum V′ im spaltartigen Raum S innerhalb des umlaufenden Dichtelements 21 wird wie bereits vorstehend beschrieben über den Kanal 11′ hergestellt.

Fig.6 zeigt in Abweichung von den Figuren 3 und 4, als weiteres Ausführungsbeispiel ein in der Nut 15 der mit dem Kanal 11 und 12 versehenen Pressplatte 10 angeordnetes Dichtelement 23, welches auf der vom Druck P′ beaufschlagten Seite sowie an der dem Zwischenstück 30 zugewandten Seite eine etwa konvexe Formgebung aufweist und an den den vertikalen Seitenwänden der Nut 15 zugewandten Seiten mit Profilnuten 24 bzw. Profilrippen 24′ versehen ist.

Fig.7 zeigt in Abweichung von den Figuren 3 und 4, als weiteres Ausführungsbeispiel ein in der Nut 15 der mit dem Kanal 11 und 12 versehenen Pressplatte 10 angeordnetes und durch den mit Pfeilrichtung P′ bezeichneten Druck gegen das Zwischenstück 30 gepresstes Dichtelement 25, welches an allen vier Seiten eine im wesentlichen konkave Formgebung aufweist.

Bei den beiden vorstehend beschriebenen Ausführungsbeispielen gemäss Fig.6 und Fig.7 erfolgt die mit Pfeilrichtung P bezeichnete Druckluftzufuhr sowie die mit Pfeilrichtung V,V′ bezeichnete Erzeugung des Vakuums im spaltartig ausgebildeten Raum S ananlog dem anhand von Fig.4 beschriebenen Ausführungsbeispiel.

Fig.8 zeigt ein Teilstück der Pressplatte 10 mit der bevor zugten Ausführungsform der Nut 15 im Eckbereich. Hierbei ist mit B die Nutbreite, mit R der äussere Radius und mit R′ der innere Radius bezeichnet, wobei zur Erreichung einer optimalen Dichtheit im Eckbereich der äussere Radius R > R′ + B ausgebildet ist. Die Nut 15 ist vorzugsweise im äusseren Bereich der Pressplattenfläche angeordnet.

Bei einer nicht dargestellten Ausführungsvariante besteht die Möglichkeit, durch ein entsprechend angeordnetes und ausgebildetes Kanalsystem die entsprechend zueinander angeordneten Teilstücke der umlaufenden Nut 15 miteinander zu verbinden, wodurch das Vakuum in dem spaltartig ausgebildeten Raum S rascher erreicht werden kann.

An dieser Stelle sei darauf hingewiesen, dass die in die Nut 15 eingebrachten und in den einzelnen Figuren mit unterschiedlicher Formgebung ausgebildeten Dichtelemente 20,21,23 und 25 beispielsweise aus elastomerem, säurebeständigem Gummi oder Kunststoff bestehen.

Das an der Pressplatte 10 vakuumvorgespannt gehaltene Zwischenstück 30 kann als relativ dünnes Blech, als Folie aus Metall oder geeignetem Kunststoff hergestellt sein. Wesentlich hierbei ist, dass die Fläche 32 des Zwischenstücks 30 die Formgebung der Produktoberfläche, beispielsweise eine glatte Fläche, eine naturholzähnliche Struktur oder dergleichen, eine einwandfreie Trennung des gepressten Produkts von dem Zwischenstück 30, einen Schutz vor Verschmutzung und Verschleiss der einzelnen Pressplatte 10,50 sowie eine optimale Wärmeübertragung zwischen der Pressplatte und dem Produktrohling während der Pressphase gewährleistet.

Die vorstehend beschriebene und aus den wesentlichen Elementen 10,30,40 und 50 gebildete Pressvorrichtung 100 kann zur Herstellung von plattenartigen Produkten, wie zum Beispiel zur Herstellung von Holzfaserplatten in dem an sich bekannten Nass-, Halbtrocken- oder Trockenverfahren, sowie zur Herstellung von Spanplatten oder zur Herstellung von Furnier- oder Tischlerplatten oder dergleichen verwendet werden.

## Ansprüche

1. Pressvorrichtung (100) für flächige Produkte, insbesondere zum Pressen grossflächiger Plattenrohlinge aus Holzwerkstoffen oder dergleichen, bestehend aus mindestens einer ersten Pressplatte (10), einem damit wirkverbundenen, plattenartigen Zwischenstück (30) sowie mindestens einer zur Auflage des Plattenrohlings (40) vorgesehenen zweiten Pressplatte (50), dadurch gekennzeichnet, dass die Pressplatte (10,50) auf der dem Zwischenstück (30) zugewandten Seite (16) mit einer umlaufenden Nut (15) zur Aufnahme eines an dem Zwischenstück (30) abdichtend anliegenden Dichtelements (20) versehen ist, und dass ein dabei zwischen der Pressplatte (10,50) sowie dem Zwischenstück (30) gebildeter und von dem Dichtelement (20) begrenzter, spaltartiger Raum (S) über mindestens einen Kanal (11) mit einem Vakuum-Erzeuger (70) in Wirkverbindung steht, mittels welchem ein das Zwischenstück (30) an der Pressplatte festhaltender Unterdruck erzeugbar ist.

2. Pressvorrichtung nach Anspruch 1, dadurch gekennzeichnet, dass das im wesentlichen den spaltartigen Raum (S) zwischen der Pressplatte (10) und dem Zwischenstück (30) hinsichtlich der Atmosphäre begrenzende Dichtelement (20,21, 23,25) von einem Druck-Erzeuger (80) mit einem Druck (P) beaufschlagbar und das Vakuum-/Druckverhältnis so gewählt ist, dass das Zwischenstück (30) abgedichtet und vakuumvorgespannt an der Pressplatte (10) gehalten ist.

3. Pressvorrichtung nach Anspruch 1 und 2, dadurch gekennzeichnet, dass der auf das Dichtelement (20,23,25) wirkende Druck-Erzeuger (80) über mindestens einen mit der Nut (15) in Verbindung stehenden Kanal (12) wirkverbunden ist.

4. Pressvorrichtung nach Anspruch 1 und 2, dadurch gekennzeichnet, dass der auf das Dichtelement (21) wirkende Druck-Erzeuger (80) über eine mit dem Innenraum (21') in Verbindung stehende Leitung (22) wirkverbunden ist.

5. Pressvorrichtung nach Anspruch 1, dadurch gekennzeichnet, dass das Dichtelement (20,21) ein beispielsweise im Profilquerschnitt kreisringförmiger, endloser Hohl- oder Vollprofilkörper ist und aus elastomerem, säurebeständigem Gummi oder Kunststoff besteht.

6. Pressvorrichtung nach Anspruch 1, dadurch gekennzeichnet, dass das Dichtelement (23) aus einem vollen, etwa viereckigen, endlosen Profilkörper besteht, der zwei gegenüberliegende, konvex ausgebildete und zwei gegenüberliegende mit Profilnuten (24) und Profilrippen (24') versehene Seiten aufweist.

7. Pressvorrichtung nach Anspruch 1, dadurch gekennzeichnet, dass das Dichtelement (25) aus einem vollen, etwa viereckigen, endlosen Profilkörper besteht, welcher vier konkav ausgebildete, gegenüberliegende Seiten aufweist.

8. Pressvorrichtung nach Anspruch 1, dadurch gekennzeichnet, dass die an der Pressplatte (10) vorgesehene Nut (15) im Eckbereich etwa als Kreisbogen ausgebildet ist, bei welchem der äussere Radius (R) grösser als der innere Radius (R') zuzüglich der Nutbreite (B), d.h.,dass R > R' + B ausgebildet ist.

9. Pressvorrichtung nach Anspruch 1 und 8, dadurch gekennzeichnet, dass die Nut (15) im äusseren Randbereich der Seite 16) der Pressplatte (10) angeordnet und als endlose, umlaufende Ausnehmung ausgebildet ist.

10. Pressvorrichtung nach einen der Ansprüche 1 bis 9, dadurch gekennzeichnet, dass die einzelnen an den Längs- und Querseiten der Pressplatte (10) gebildeten Teilstücke der umlaufenden Nut (15) durch ein Kanalsystem miteinander verbunden sind.

11. Pressvorrichtung nach Anspruch 1, dadurch gekennzeichnet, dass das plattenartige Zwischenstück (30) aus relativ dünnem Blech oder einer Folie aus Metall oder geeignetem Kunststoff besteht und auf der dem Produkt (40) zugewandten Seite (32) eine glatte oder naturholzähnliche Strukturoberfläche oder dergleichen aufweist.

100

10

15

11

70

V

75

76

15

12

85

86

80

P

16

16'

20

17

15

30

16"

15

40

60

50

56

FIG. 2

55

FIG. 8

FIG. 1

60

100

B

15

R'

R

10

20

FIG. 3

FIG. 5

FIG. 4

FIG. 6

FIG. 7

**Europäisches Patentamt**

# EUROPÄISCHER RECHERCHENBERICHT

Nummer der Anmeldung

EP 88 11 9527

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 612 322 (HOLMQVIST)<br>* Insgesamt * | 1,11 | B 30 B 15/02<br>F 16 J 15/46 |
| Y | | 2-7,9 | |
| X | DE-A-2 903 677 (HOLQVIST)<br>* Insgesamt *<br>--- | 1,11 | |
| X | DE-C- 829 793 (BECKER & VAN HÜLLEN)<br>* Insgesamt *<br>--- | 1,11 | |
| Y | GB-A- 646 862 (CALHOUN)<br>* Insgesamt *<br>--- | 2,4,5,8,9 | |
| Y | DE-B-1 046 443 (FEZER)<br>* Insgesamt; Figuren 5,6 *<br>--- | 5,6 | |
| Y | EP-A-0 163 820 (HYMMEN)<br>* Seite 4, Zeilen 13-21; Figur 3 *<br>--- | 4,5,8,9 | |
| Y | EP-A-0 128 282 (HYMMEN)<br>* Seite 7, Zeile 20 - Seite 8, Zeile 4; Figuren 6,8 *<br>--- | 3,5,8,9 | **RECHERCHIERTE SACHGEBIETE (Int. Cl.4)** |
| Y | US-A-4 103 903 (CAPRIOTTI)<br>* Spalte 6, Zeilen 33-43; Figur 5 *<br>----- | 3,5,7 | B 30 B<br>B 25 B<br>B 27 N<br>F 16 J |

Der vorliegende Recherchenbericht wurde für alle Patentansprüche erstellt

| Recherchenort | Abschlußdatum der Recherche | Prüfer |
|---|---|---|
| DEN HAAG | 12-04-1989 | BOLLEN J.A.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)